# EUROPÄISCHE PATENTSCHRIFT

(11) **EP 3 687 355 B1**
(45) Veröffentlichungstag und Bekanntmachung des Hinweises auf die Patenterteilung: **25.03.2026**
(21) Anmeldenummer: 18780091.7
(22) Anmeldetag: 27.09.2018
(51) Int. Cl.: A47K 3/28, A47B 96/02, G04B 47/02, F21V 33/00

(54) **ABLAGEVORRICHTUNG, INSBESONDERE BAD- UND/ODER DUSCHABLAGEVORRICHTUNG**
STORAGE DEVICE, MORE PARTICULARLY BATH- AND/OR SHOWER STORAGE DEVICE
DISPOSITIF SUPPORT, EN PARTICULIER DISPOSITIF SUPPORT POUR UNE BAIGNOIRE ET/OU UNE DOUCHE

(30) Priorität: 28.09.2017 DE 102017122598
(43) Veröffentlichungstag der Anmeldung: 05.08.2020
(73) Patentinhaber: Knoll Jun, Alexander, 74405 Gaildorf (DE)
(72) Erfinder: Knoll Jun, Alexander, 74405 Gaildorf (DE)
(74) Vertreter: Daub, Thomas
(86) Internationale Anmeldenummer: PCT/EP2018/076344
(87) Internationale Veröffentlichungsnummer: WO 2019/063729

(56) Entgegenhaltungen:
- FR-A1- 2 606 614
- US-A- 5 626 084
- US-A1- 2013 341 216

## Beschreibung

### Stand der Technik

Die Erfindung betrifft eine Ablagevorrichtung, insbesondere eine Bad- und/oder Duschablagevorrichtung, mit zumindest einem Ablageelement und mit zumindest einer Befestigungseinheit zu einer Befestigung des Ablageelements an einer Wand, insbesondere einer befliesten Raumwand.

Aus DE 10 2012 015 574 A1 ist bereits eine Ablagevorrichtung, insbesondere eine Bad- und/oder Duschablagevorrichtung, mit zumindest einem Ablageelement und mit zumindest einer Befestigungseinheit zu einer Befestigung des Ablageelements an einer Wand, insbesondere einer befliesten Raumwand, bekannt. Ferner sind aus DE 20 2006 011 112 U1, DE 20 2012 104 121 U1, EP 2 710 194 B1 und

CN 202 801 402 U jeweils Ablagevorrichtungen mit zumindest einem Ablageelement, mit zumindest einer Befestigungseinheit zu einer Befestigung des Ablageelements an einer Wand und mit zumindest einer zumindest teilweise am Ablageelement angeordneten Elektronikeinheit bekannt.

US 5 626 084 A offenbart eine Ablagevorrichtung gemäß dem Oberbegriff des Anspruchs 1.

Die Aufgabe der Erfindung besteht insbesondere darin, eine gattungsgemäße Vorrichtung mit verbesserten Eigenschaften hinsichtlich eines Benutzerkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Ablagevorrichtung, insbesondere von einer Bad- und/oder Duschablagevorrichtung, gemäß dem unabhängigen Anspruch 1 mit zumindest einem Ablageelement, mit zumindest einer Befestigungseinheit zu einer Befestigung des Ablageelements an einer Wand, insbesondere einer befliesten Raumwand, und **mit** zumindest einer zumindest teilweise am Ablageelement angeordneten Elektronikeinheit, insbesondere einer Beleuchtungseinheit und/oder einer Unterhaltungselektronikeinheit.

Die umfasst zumindest eine Revisionseinheit, die zumindest ein an einem Grundkörperelement der Befestigungseinheit und/oder an dem Ablageelement abnehmbar und/oder beweglich gelagertes Revisionselement aufweist.

Die Elektronikeinheit ist zumindest teilweise, insbesondere zumindest zu einem Großteil, in die Ablagevorrichtung, sprich in das Ablageelement, integriert.

Das Ablageelement und/oder das Grundkörperelement der Befestigungseinheit umfasst zumindest eine Aufnahmeausnehmung zu einer zumindest teilweisen Aufnahme der Elektronikeinheit. Vorzugsweise ist die Elektronikeinheit zumindest zu einem Großteil in der Aufnahmeausnehmung angeordnet. Unter "einem Großteil" soll hier insbesondere mehr als 50 %, bevorzugt mehr als 70 % und besonders bevorzugt mehr als 90 % eines maximalen Gesamtvolumens eines Elements und/oder einer Einheit verstanden werden. Vorzugsweise ist die Elektronikeinheit als Beleuchtungseinheit und/oder als Unterhaltungselektronikeinheit ausgebildet. Die Elektronikeinheit kann als LED-Einheit, als Lautsprechereinheit, als Displayeinheit, als Induktionsladeeinheit, als elektronische Bedieneinheit, als Projektionseinheit, als Sensoreinheit, als Energieumwandlungseinheit, als Kameraeinheit, als Mirkofoneinheit und/oder als eine andere, einem Fachmann als sinnvoll erscheinende Elektronikeinheit ausgebildet sein. Bevorzugt umfasst die Elektronikeinheit, insbesondere bei einer Ausgestaltung der Elektronikeinheit als Beleuchtungseinheit, zumindest ein Beleuchtungselement, insbesondere zumindest eine LED, das am Ablageelement und/oder an der Befestigungseinheit angeordnet ist. Vorzugsweise ist das Beleuchtungselement zumindest teilweise, insbesondere vollständig, in der Aufnahmeausnehmung angeordnet. Besonders bevorzugt umfasst die Elektronikeinheit, insbesondere bei einer Ausgestaltung der Elektronikeinheit als Beleuchtungseinheit, eine Vielzahl an Beleuchtungselementen, insbesondere LEDs, die am Ablageelement und/oder an der Befestigungseinheit angeordnet sind, insbesondere in der Aufnahmeausnehmung angeordnet sind. Eine Steuerungs- und/oder Regelungseinheit zu einer Steuerung und/oder Regelung des zumindest einen Beleuchtungselements, insbesondere der als LEDs ausgebildeten Beleuchtungselemente, kann Teil der Elektronikeinheit sein oder separat zu der Elektronikeinheit ausgebildet sein. Vorzugsweise ist die Steuerungs- und/oder Regelungseinheit, insbesondere bei einer Ausgestaltung der Steuerungs- und/oder Regelungseinheit als Teil der Elektronikeinheit, an dem Ablageelement und/oder an der Befestigungseinheit angeordnet, insbesondere in der Aufnahmeausnehmung angeordnet. Es ist jedoch auch denkbar, dass die Steuerungs- und/oder Regelungseinheit, insbesondere bei einer separaten Ausgestaltung der Steuerungs- und/oder Regelungseinheit von der Elektronikeinheit, beabstandet zum Ablageelement und/oder zur Befestigungseinheit, insbesondere zur Ablagevorrichtung, angeordnet ist und mittels einer, insbesondere kabelgebundenen oder kabellosen, Kommunikationsverbindung steuer- und/oder regelungstechnisch mit der Elektronikeinheit, insbesondere mit den als LEDs ausgebildeten Beleuchtungselementen, verbunden ist.

Das zumindest eine Beleuchtungselement, insbesondere die Beleuchtungselemente, ist/sind vorzugsweise dazu vorgesehen, Licht zumindest im Wesentlichen entlang einer zumindest im Wesentlichen parallel zu einer Ablagefläche des Ablageelements in das Ablageelement einzubringen. Vorzugsweise ist/sind das Beleuchtungselement, insbesondere die Beleuchtungselemente, derart an dem Ablageelement angeordnet, das eine Hauptlichtausstrahlungsrichtung des Beleuchtungselements, insbesondere der Beleuchtungselemente, zumindest im Wesentlichen parallel zur Ablagefläche des Ablageelements verläuft. Bevorzugt ist/sind das Beleuchtungselement, insbesondere die Beleuchtungselemente, an einer zumindest im Wesentlichen senkrecht zur Ablagefläche des Ablageelements verlaufenden Seitenwandungsfläche des Ablageelements angeordnet. Es ist jedoch auch denkbar, dass das/die Beleuchtungselement, insbesondere die Beleuchtungselemente, zu einer Beleuchtung des Ablageelements an einer zumindest im Wesentlichen parallel zur Ablagefläche des Ablageelements verlaufenden Fläche des Ablageelements angeordnet sind, insbesondere in einer alternativen Ausgestaltung der Ablagevorrichtung, oder an einer anderen, einem Fachmann als sinnvoll erscheinenden Fläche, Kante oder Seite des Ablageelements angeordnet sind, um eine Beleuchtung des Ablageelements zu realisieren. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Das Ablageelement ist vorzugsweise als Flächenlichtelement, insbesondere als randseitig beleuchtbares Flächenlichtelement, ausgebildet. Vorzugsweise ist das Ablageelement als Acrylglasplatte, als Glasplatte o. dgl. ausgebildet. Das Ablageelement weist bevorzugt an zumindest einer Seite eine Lackschicht, insbesondere zu einer Reflektion des mittels des/der Beleuchtungselements/Beleuchtungselemente, ausgestrahlten Lichts. Das Ablageelement kann eine Lichtstreuungslackierung aufweisen. Es ist jedoch auch denkbar, dass das Ablageelement eine andere, einem Fachmann als sinnvoll erscheinende Ausgestaltung aufweist, die eine Flächenbeleuchtung durch randseitig angeordnete Beleuchtungselemente ermöglicht. Vorzugsweise umfasst die Ablagevorrichtung zumindest ein Streuungs- und/oder Bündelungselement, wie beispielsweise ein Laserrasterungselement, ein Reflektorelement o. dgl. das am Ablageelement angeordnet ist oder einteilig mit dem Ablageelement ausgebildet ist. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise ist die Befestigungseinheit aus einem metallischen Werkstoff, insbesondere Edelstahl, gebildet. Es ist jedoch auch denkbar, dass die Befestigungseinheit aus einem anderen, einem Fachmann als sinnvoll erscheinenden Werkstoff, wie beispielsweise Kunststoff o. dgl. gebildet ist. Die Befestigungseinheit umfasst zumindest das Grundkörperelement, an dem das Ablageelement zumindest teilweise anliegt, insbesondere direkt anliegt. Das Grundkörperelement umfasst zumindest eine Anlagefläche, an dem das Ablageelement in einem an dem Grundkörperelement angeordneten Zustand des Ablageelements mit einer der Ablagefläche des Ablageelements abgewandten Fläche des Ablageelements anliegt.

Die Anlagefläche des Grundkörperelements erstreckt sich in einem an dem Grundkörperelement angeordneten Zustand des Ablageelements vorzugsweise zumindest im Wesentlichen parallel zur Ablagefläche des Ablageelements. Das Ablageelement ist vorzugsweist mittels einer form-, kraft- und/oder stoffschlüssigen Verbindung an der Befestigungseinheit, insbesondere dem Grundkörperelement, fixiert. Die Befestigungseinheit umfasst bevorzugt zumindest ein Wandbefestigungselement zu einer Befestigung der Befestigungseinheit an einer Wand, insbesondere einer befliesten Raumwand. Das Wandbefestigungselement umfasst vorzugsweise zumindest eine Wandanlagefläche, mittels derer das Wandbefestigungselement an der Wand anordenbar ist, insbesondere an einer Rohwand, die vorzugsweise unbefliest ist. Die Wandanlagefläche ist vorzugsweise dazu vorgesehen, mittels eines Fliesenklebers und/oder eines Befestigungselements, wie beispielsweise mittels einer Schraube, mittels eines Nagels o. dgl., an der Wand, insbesondere an der Rohwand, befestigt zu werden. Es ist jedoch auch denkbar, dass die Wandanlagefläche dazu vorgesehen, mittels eines Befestigungselements, wie beispielsweise mittels einer Schraube, mittels eines Nagels o. dgl., an einer bereits mit einem Wandbelag, wie beispielsweise einer oder mehreren Fliesen, versehenen Wand befestigt zu werden. Insbesondere umfasst das Wandbefestigungselement zumindest eine Ausnehmung zu einer Aufnahme des Fliesenklebers und/oder des Befestigungselements. Bevorzugt umfasst das Wandbefestigungselement zumindest eine Wandbelagsanlagefläche zu einer Anlage an einem Wandbelag, insbesondere einer Fliese. Bevorzugt ist der Wandbelag, insbesondere die Fliese, mittels eines Fliesenklebers an der Wandbelagsanlagefläche fixierbar. Die Wandbelagsanlagefläche ist vorzugsweise auf einer der Wandanlagefläche abgewandten Seite des Wandbefestigungselements angeordnet, insbesondere an einer dem Ablageelement zugewandten Seite des Wandbefestigungselements. Die Aufnahme des Wandbefestigungselements erstreckt sich vorzugsweise ausgehend von der Wandbelagsanlagefläche bis zur Wandanlagefläche. Das Wandbefestigungselement erstreckt sich vorzugsweise in einer Ebene, die zumindest im Wesentlichen senkrecht zu einer Haupterstreckungsebene des Grundkörperelements verläuft. Die Haupterstreckungsebene des Grundkörperelements verläuft in einem an dem Grundkörperelement angeordneten Zustand des Ablageelements bevorzugt zumindest im Wesentlichen parallel zur Ablagefläche des Ablageelements. Unter "vorgesehen" soll insbesondere speziell programmiert, ausgelegt und/oder ausgestattet verstanden werden.

Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Bevorzugt umfasst die Befestigungseinheit zumindest zwei Wandbefestigungselemente. Die zumindest zwei Wandbefestigungselemente weisen vorzugweise eine zumindest im Wesentlichen analoge Ausgestaltung auf. Es ist jedoch auch denkbar, dass die Befestigungseinheit eine von zwei abweichende Anzahl an Wandbefestigungselementen aufweist. Vorzugsweise sind das/die Wandbefestigungselement/e und das Grundkörperelement einteilig miteinander ausgebildet.

Die Befestigungseinheit umfasst einen Randsteg. Der Randsteg erstreckt sich vorzugsweise in einer Ebene, die zumindest im Wesentlichen senkrecht zur Haupterstreckungsebene des Grundkörperelements verläuft. Der Randsteg ist dazu vorgesehen, zumindest eine Seite des Ablageelements zumindest zu mehr als 30 %, bevorzugt zu mehr als 60 %, besonders bevorzugt zu mehr als 90 % und ganz besonders bevorzugt vollständig zu bedecken, insbesondere in einem an der Befestigungseinheit angeordneten Zustand des Ablageelements. Der Randsteg ist vorzugsweise einteilig mit dem/den Wandbefestigungselement/en sowie dem Grundkörperelement ausgebildet.

Das Revisionselement ist vorzugsweise translatorisch und/oder schwenkbar am Grundkörperelement und/oder am Ablageelement gelagert. Vorzugsweise umfasst die Revisionseinheit eine Bewegungsachse, um und/oder entlang derer das Revisionselement relativ zum Grundkörperelement und/oder zum Ablageelement beweglich gelagert ist. Bevorzugt verläuft die Bewegungsachse der Revisionseinheit zumindest im Wesentlichen parallel zur Ablagefläche des Ablageelements und/oder zur Haupterstreckungsebene des Grundkörperelements. Es ist jedoch auch denkbar, dass die Bewegungsachse entlang einer anderen, einem Fachmann als sinnvoll erscheinenden Fläche und/oder Ebene des Ablageelements und/oder des Grundkörperelements verläuft.

Das Revisionselement ist dazu vorgesehen, die Aufnahmeausnehmung zu verschließen. Das Revisionselement ist als Revisionsklappe, als Revisionsdeckel, als Revisionsabdeckung o. dgl. ausgebildet. Vorzugsweise umfasst die Revisionseinheit zumindest ein, insbesondere beweglich gelagertes, Fixierungselement zu einer Sicherung des Revisionselements gegen eine Bewegung relativ zum Ablageelement und/oder zum Grundkörperelement. Das Fixierungselement ist bevorzugt als Verschluss ausgebildet. Das Fixierungselement kann als beweglich gelagerter Drehhebel, als Kniegelenkverschluss, als Schraube, als Rastverschluss oder als ein anderer, einem Fachmann als sinnvoll erscheinender Verschluss ausgebildet sein. Das Revisionselement kann auf einer dem Grundkörperelement abgewandten Seite des Ablageelements, an einer dem Ablageelement abgewandten Seite des Grundkörperelements, an einer quer zur Ablagefläche des Ablageelements und/oder zur Haupterstreckungsebene des Grundkörperelements oder an einer anderen, einem Fachmann als sinnvoll erscheinenden Seite des Ablageelements und/oder des Grundkörperelements angeordnet sein.

Mittels der erfindungsgemäßen Ausgestaltung der Ablagevorrichtung kann vorteilhaft ein komfortabel zu bedienender Zugang/Zugriff zur/auf die Elektronikeinheit realisiert werden, insbesondere zu einer Wartung und/oder Reparatur der Elektronikeinheit. Es kann vorteilhaft eine Aufnahmeausnehmung, in dem die Elektronikeinheit angeordnet ist, sicher verschlossen werden. Es kann vorteilhaft ein hoher Benutzerkomfort erreicht werden. Es kann vorteilhaft eine zumindest im Wesentlichen zeitgleiche Anordnung der Elektronikeinheit und der Ablagevorrichtung an einer Wand, insbesondere einer Raumwand, realisiert werden. Es können vorteilhaft Montagekosten und/oder Montagezeit eingespart werden, insbesondere im Vergleich zu einer separaten Montage einer Ablagevorrichtung und einer daran fixierbaren Elektronikeinheit. Es kann vorteilhaft eine konstruktiv sichere und einfache Integration einer Elektronikeinheit in die Ablagevorrichtung ermöglicht werden. Es kann konstruktiv einfach eine indirekte Beleuchtung realisiert werden, insbesondere in einem Badezimmer. Es kann vorteilhaft konstruktiv einfach eine Unterhaltungselektronikeinheit sicher an der Ablagevorrichtung angeordnet werden.

Ferner wird vorgeschlagen, dass die Ablagevorrichtung zumindest eine Dichtungseinheit umfasst, die dazu vorgesehen ist, das Revisionselement dichtend am Grundkörperelement und/oder am Ablageelement anzuordnen, insbesondere gemäß einer Schutzklasse größer als IP51 nach DIN EN 60529, bevorzugt größer als IP61 nach DIN EN 60529 und besonders bevorzugt größer als IP65 nach DIN EN 60529. Ganz besonders bevorzugt ist die Dichtungseinheit dazu vorgesehen, das Revisionselement gemäß einer Schutzklasse IP68 nach DIN EN 60529 dichtend am Grundkörperelement und/oder am Ablageelement anzuordnen. Die Dichtungseinheit umfasst zumindest ein am Grundkörperelement und/oder am Ablageelement angeordnetes Dichtungselement. Das Dichtungselement ist vorzugsweise zwischen dem Revisionselement sowie dem Grundkörperelement und/oder dem Ablageelement angeordnet. Das Dichtungselement kann als Papierdichtung, als Gummidichtung, als Kunststoffdichtung o. dgl. ausgebildet sein. Vorzugsweise umgibt das Dichtungselement die Aufnahmeausnehmung zumindest teilweise, insbesondere vollständig. Bevorzugt liegt das Dichtungselement mit zumindest einer Dichtfläche am Grundkörperelement und/oder dem Ablageelement an. Vorzugsweise liegt das Dichtungselement mit zumindest einer weiteren Dichtungsfläche am Revisionselement an, insbesondere in einem verschlossenen Zustand des Revisionselements. Mittels der erfindungsgemäßen Ausgestaltung kann vorteilhaft ein sicherer Schutz der Elektronikeinheit erreicht werden. Es kann vorteilhaft ein sicherer Schutz insbesondere vor einem Eindringen von Staub und/oder Feuchtigkeit in die Aufnahmeausnehmung realisiert werden. Es kann vorteilhaft ein hoher Benutzerkomfort erreicht werden, insbesondere da die Ablagevorrichtung komfortabel und sicher in einem Badezimmer, insbesondere einer Nasszelle, anordenbar ist.

Zudem wird vorgeschlagen, dass die Ablagevorrichtung zumindest eine, insbesondere drahtlose, Kommunikationseinheit umfasst, die dazu vorgesehen ist, elektronische Daten mit einer externen Einheit auszutauschen, die von der Elektronikeinheit verarbeitbar sind und/oder zu einer Steuerung und/oder Regelung der Elektronikeinheit vorgesehen sind. Die Kommunikationseinheit kann als Bluetootheinheit, als NFC-Einheit, als Infraroteinheit, als Funkeinheit, insbesondere als WLAN-Einheit, und/oder als eine andere, einem Fachmann als sinnvoll erscheinende, insbesondere drahtlose, Kommunikationseinheit ausgebildet sein. Es ist auch denkbar, dass die Kommunikationseinheit alternativ oder zusätzlich als kabelgebundene Kommunikationseinheit ausgebildet ist. Die externe Einheit kann als Fernbedienung, insbesondere zu einer Steuerung und/oder Regelung der Elektronikeinheit, wie beispielsweise zu einer Steuerung und/oder Regelung einer Farbe der als Beleuchtungseinheit ausgebildeten Elektronikeinheit, zu einer Steuerung und/oder Regelung einer Helligkeit der als Beleuchtungseinheit ausgebildeten Elektronikeinheit, zu einer Steuerung und/oder Regelung einer Lautstärke der als Unterhaltungselektronikeinheit ausgebildeten Elektronikeinheit, zu einer Intensität eines Displays der als Unterhaltungselektronikeinheit ausgebildeten Elektronikeinheit, zu einer Steuerung und/oder Regelung einer Temperatur der als Thermostateinheit ausgebildeten Elektronikeinheit o. dgl., ausgebildet sein. Es ist auch denkbar, dass die externe Einheit als mobile Rechen- und/oder Kommunikationsvorrichtung, insbesondere als Smartphone, als Tablet, als Laptop o. dgl., ausgebildet ist, die elektronische Daten mit der Kommunikationseinheit austauschen kann, die der Elektronikeinheit verarbeitbar sind und/oder zu einer Steuerung und/oder Regelung der Elektronikeinheit vorgesehen sind. Mittels der erfindungsgemäßen Ausgestaltung kann vorteilhaft eine komfortable Übertragung von elektronischen Daten zu einer Verarbeitung durch die Elektronikeinheit und/oder zu einer Steuerung und/oder Regelung der Elektronikeinheit realisiert werden. Es kann vorteilhaft ein hoher Benutzerkomfort erreicht werden.

Des Weiteren wird vorgeschlagen, dass die Elektronikeinheit zumindest ein, insbesondere akustisches und/oder optisches, Ein- und/oder Ausgabeelement aufweist, das am Grundkörperelement und/oder am Ablageelement angeordnet ist, wobei das Ein- und/oder Ausgabeelement in Abhängigkeit von mittels der Kommunikationseinheit übertragenen elektronischen Daten steuerbar und/oder regelbar ist. Das Ein- und/oder Ausgabeelement kann als Lautsprecher, als Display, als Touchdisplay o. dgl. ausgebildet sein. Vorzugsweise ist das Ein- und/oder Ausgabeelement bei einer Ausgestaltung als Display zumindest teilweise in das Ablageelement integriert, insbesondere als OLED-Foliendisplay o. dgl., ausgebildet. Vorzugsweise bildet das Ein- und/oder Ausgabeelement bei einer Ausgestaltung als Display zumindest teilweise die Ablagefläche des Ablageelements. Es ist jedoch auch denkbar, dass das Ein- und/oder Ausgabeelement zumindest teilweise in die Befestigungseinheit integriert ist. Mittels der erfindungsgemäßen Ausgestaltung kann vorteilhaft eine Unterhaltungs- und/oder Informationsübertragung an einen Benutzer realisiert werden, insbesondere bei einer Anordnung der Ablagevorrichtung in einer Nasszelle kann eine vorteilhafte Unterhaltungs- und/oder Informationsmöglichkeit für einen Benutzer realisiert werden. Es kann vorteilhaft ein hoher Benutzerkomfort erreicht werden.

Ferner wird vorgeschlagen, dass die Elektronikeinheit zumindest ein, insbesondere akustisches und/oder optisches, Ein- und/oder Ausgabeelement aufweist, das beweglich am Grundkörperelement und/oder am Ablageelement gelagert ist. Das Ein- und/oder Ausgabeelement ist vorzugsweise, insbesondere bei einer Ausgestaltung als Display, beweglich, insbesondere translatorisch und/oder schwenkbar, am Grundkörperelement und/oder am Ablageelement gelagert. Vorzugsweise ist das Ein- und/oder Ausgabeelement bei einer Ausgestaltung als Display translatorisch und/oder schwenkbar entlang und/oder um eine Bewegungsachse des Ablageelements gelagert, die zumindest im Wesentlichen parallel zur Ablagefläche des Ablageelements und/oder zur Haupterstreckungsebene des Grundkörperelements verläuft. Das Ein- und/oder Ausgabeelement kann auf einer dem Grundkörperelement abgewandten Seite des Ablageelements, an einer dem Ablageelement abgewandten Seite des Grundkörperelements, an einer quer zur Ablagefläche des Ablageelements und/oder zur Haupterstreckungsebene des Grundkörperelements oder an einer anderen, einem Fachmann als sinnvoll erscheinenden Seite des Ablageelements und/oder des Grundkörperelements, insbesondere beweglich gelagert, angeordnet sein. Mittels der erfindungsgemäßen Ausgestaltung kann vorteilhaft eine kompakte Ausgestaltung der Ablagevorrichtung realisiert werden. Vorzugsweise ist eine Position des Ein- und/oder Ausgabeelements relativ zum Ablageelement und/oder zum Grundkörperelement stufenlos einstellbar. Es kann vorteilhaft eine Bewegung des Ein- und/oder Ausgabeelements in eine für einen Benutzer am sinnvollsten Position realisiert werden. Es kann vorteilhaft ein hoher Benutzerkomfort erreicht werden.

Zudem wird vorgeschlagen, dass die Ablagevorrichtung zumindest eine Energieumwandlungseinheit, insbesondere eine Energy-Harvesting-Einheit, umfasst, die dazu vorgesehen ist, mechanische Energie und/oder thermische Energie in elektrische Energie für einen Betrieb der Elektronikeinheit umzuwandeln. Vorzugsweise ist die Energieumwandlungseinheit dazu vorgesehen, Bewegungsenergie und/oder Strahlungsenergie, wie beispielsweise Lichtstrahlung, in elektrische Energie umzuwandeln. Bevorzugt umfasst die Energieumwandlungseinheit zumindest ein Piezoelement, insbesondere eine Piezoraster, und/oder ein Solarelement. Vorzugsweise ist die Energieumwandlungseinheit dazu vorgesehen, mechanische und/oder thermische Energie von auf die Energieumwandlungseinheit auftreffenden Wassertropfen, von einen auf die Energieumwandlungseinheit auftreffenden Wasserstrahl und/oder von auf die Energieumwandlungseinheit auftreffender Lichtstrahlung, insbesondere bei einer Anordnung der Ablagevorrichtung in einer Nasszelle, wie beispielsweise einer Duschkabine, in elektrische Energie für einen Betrieb der Elektronikeinheit umzuwandeln. Vorzugsweise ist die Energieumwandlungseinheit elektrisch mit einer Energiespeichereinheit, insbesondere einem Akkumulator, der Ablagevorrichtung verbunden. Mittels der erfindungsgemäßen Ausgestaltung kann vorteilhaft ein umweltschonender Betrieb der Elektronikeinheit realisiert werden. Es kann vorteilhaft ein hoher Benutzerkomfort erreicht werden.

Des Weiteren wird vorgeschlagen, dass die Elektronikeinheit zumindest ein am Grundkörperelement und/oder am Ablageelement angeordnetes, insbesondere berührungsempfindliches, Bedienelement zu einer Eingabe von Bedienbefehlen aufweist. Das Bedienelement kann zumindest teilweise einteilig mit dem Ein- und/oder Ausgabeelement ausgebildet sein, insbesondere bei einer Ausgestaltung des Ein- und/oder Ausgabeelement als berührungsempfindliches Display. Es ist jedoch auch denkbar, dass das Bedienelement separat zum Ein- und/oder Ausgabeelement ausgebildet ist. Beispielsweise ist es denkbar, dass das Bedienelement am Revisionselement angeordnet ist, insbesondere als berührungsempfindliches Bedienelement, wie beispielsweise als Touchsensor o. dgl. Das Bedienelement ist vorzugsweise zu einer Eingabe eines Bedienbefehls zu einer Steuerung und/oder Regelung der Elektronikeinheit vorgesehen, wie beispielsweise zu einer Auswahl einer Farbe der als Beleuchtungseinheit ausgebildeten Elektronikeinheit, zu einer Einstellung einer Helligkeit der als Beleuchtungseinheit ausgebildeten Elektronikeinheit, zu einer Einstellung einer Lautstärke der als Unterhaltungselektronikeinheit ausgebildeten Elektronikeinheit, zu einer Auswahl eines Programms, insbesondere eines Radio- und/oder Fernsehsenders, der als Unterhaltungselektronikeinheit ausgebildeten Elektronikeinheit o. dgl. Die Elektronikeinheit kann eine Vielzahl an, insbesondere berührungsempfindlichen, Bedienelementen aufweisen, die zu einer Eingabe eines Bedienbefehls vorgesehen sind und am Grundkörperelement und/oder am Ablageelement angeordnet sind. Mittels der erfindungsgemäßen Ausgestaltung kann vorteilhaft eine komfortable Bedienung der Elektronikeinheit realisiert werden. Es kann vorteilhaft ein hoher Benutzerkomfort erreicht werden.

Ferner wird vorgeschlagen, dass die Elektronikeinheit zumindest eine, insbesondere kabelgebundene, Energie- und/oder Kommunikationsschnittstelle zu einer Übertragung von elektrischer Energie und/oder elektronischen Daten aufweist. Die, insbesondere kabelgebundene, Energie- und/oder Kommunikationsschnittstelle kann beispielsweise als USB-Schnittstelle o. dgl. ausgebildet sein, die zu einer Verbindung mit einer mobilen Speicher- und/oder Kommunikationsvorrichtung, insbesondere einem Smartphone, einem Tablet, einem Laptop, einem USB-Stick o. dgl. Vorzugsweise umfasst die Dichtungseinheit zumindest ein Verschlusselement, das dazu vorgesehen ist, die Energie- und/oder Kommunikationsschnittstelle dichtend zu verschließen. Mittels der erfindungsgemäßen Ausgestaltung kann vorteilhaft ein komfortabler Datenaustausch zu einem Betrieb der Elektronikeinheit realisiert werden. Es kann vorteilhaft ein hoher Benutzerkomfort erreicht werden.

Zudem wird vorgeschlagen, dass die Elektronikeinheit zumindest eine Induktionseinheit aufweist, die zu einer induktiven Übertragung von elektrischer Energie vorgesehen ist. Die Induktionseinheit ist vorzugsweise am Ablageelement, insbesondere im Nahbereich der Ablagefläche des Ablageelements, und/oder am Grundkörperelement angeordnet. Die Induktionseinheit umfasst vorzugsweise zumindest ein Induktionsspulenelement, das zu einer kabellosen Übertragung von elektrischer Energie vorgesehen ist. Mittels der erfindungsgemäßen Ausgestaltung kann vorteilhaft ein komfortables Aufladen eines mobilen akkubetriebenen Geräts und/oder eine Erwärmung einer externen Einheit, wie beispielsweise einer Kaffeetasse, einer Babyflasche, einer Nahrungsmittelaufnahmeeinheit o. dgl., realisiert werden. Es kann vorteilhaft ein hoher Benutzerkomfort erreicht werden.

Des Weiteren wird vorgeschlagen, dass die Elektronikeinheit zumindest eine Projektionseinheit aufweist, die dazu vorgesehen ist, Informationen auf einen von der Projektionseinheit beabstandeten Gegenstand, insbesondere eine Raumwand oder einen Wasserstrahl, zu projizieren. Die Projektionseinheit ist bevorzugt am Ablageelement und/oder am Grundkörperelement angeordnet. Vorzugsweise ist zumindest ein Ausgabelinsenelement der Projektionseinheit in einer Außenseite des Ablageelements und/oder des Grundkörperelements angeordnet, insbesondere zu einer Ermöglichung einer Aussendung eines Projektionsstrahls, insbesondere eines Licht- und/oder Laserstrahls. Mittels der erfindungsgemäßen Ausgestaltung kann vorteilhaft eine Projektion von Informationen, wie beispielsweise eine Uhrzeit, ein Video, ein Bild o. dgl., an eine Raumwand und/oder einen Wasserstrahl, realisiert werden. Es kann vorteilhaft ein hoher Benutzerkomfort erreicht werden, insbesondere durch eine komfortable und gut einsehbare Ausgabe von Informationen mittels der Projektionseinheit.

Ferner wird vorgeschlagen, dass die Elektronikeinheit zumindest ein Thermostatelement zu einer Regelung einer Temperatur eines Wasserstrahls und/oder einer Raumtemperatur aufweist, insbesondere infolge einer drahtlosen Übertragung von elektronischen Daten an eine externe Heizungsvorrichtung. Es ist jedoch auch denkbar, dass die Elektronikeinheit kabelgebunden mit der Heizungsvorrichtung verbunden ist, insbesondere zu einer Regelung einer Temperatur eines Wasserstrahls und/oder einer Raumtemperatur mittels des Thermostatelements. Vorzugsweise ist eine gewünschte Temperatur mittels des Bedienelements der Elektronikeinheit von einem Benutzer eingebbar. Es ist jedoch auch denkbar, dass die Elektronikeinheit ein als Mikrofon ausgebildetes Spracheingabeelement zu einer Eingabe von Bedienbefehlen aufweist, insbesondere zu einer Realisierung einer Sprachsteuerung der Elektronikeinheit, insbesondere einer Funktion des Thermostatelements. Mittels der erfindungsgemäßen Ausgestaltung kann vorteilhaft eine komfortable Regelung einer Temperatur, insbesondere einer Raum- und/oder Wassertemperatur realisiert werden. Es kann vorteilhaft ein hoher Benutzerkomfort erreicht werden, insbesondere durch eine komfortable und einfach zu bedienende Temperaturregelung.

Zudem wird vorgeschlagen, dass die Ablagevorrichtung zumindest eine Energiespeichereinheit, insbesondere zumindest einen Akkumulator, zu einer Speicherung von elektrischer Energie zu einer Versorgung der Elektronikeinheit umfasst. Die Energiespeichereinheit ist vorzugsweise an dem Ablageelement und/oder an dem Grundkörperelement angeordnet. Bevorzugt ist die Energiespeichereinheit zumindest teilweise in das Ablageelement und/oder in das Grundkörperelement integriert, insbesondere auswechselbar. Es ist jedoch auch denkbar, dass die Energiespeichereinheit in der Aufnahmeausnehmung angeordnet ist und an einer Platine der Elektronikeinheit angeordnet ist. Mittels der erfindungsgemäßen Ausgestaltung kann vorteilhaft ein kabelloser Betrieb der Elektronikeinheit realisiert werden. Es kann vorteilhaft eine Anordnung der Ablagevorrichtung in einer Nasszelle, insbesondere in einer Duschkabine realisiert werden, die unabhängig von einer Stromleitung ist. Es kann vorteilhaft ein hoher Benutzerkomfort erreicht werden.

Die erfindungsgemäße Ablagevorrichtung soll hierbei nicht auf die oben beschriebene Anwendung und Ausführungsform beschränkt sein. Insbesondere kann die erfindungsgemäße Ablagevorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Ablagevorrichtung mit einem an einem Ablageelement der erfindungsgemäßen Ablagevorrichtung angeordneten Revisionselement einer Revisionseinheit der erfindungsgemäßen Ablagevorrichtung in einer schematischen Darstellung,
- Fig. 2: die erfindungsgemäße Ablagevorrichtung mit dem in einem geöffneten Zustand befindlichen Revisionselement in einer schematischen Darstellung,
- Fig. 3: eine alternative erfindungsgemäße Ablagevorrichtung mit einem an einem Grundkörperelement einer Befestigungseinheit der erfindungsgemäßen Ablagevorrichtung angeordneten Revisionselement einer Revisionseinheit der erfindungsgemäßen Ablagevorrichtung in einer schematischen Darstellung und
- Fig. 4: eine weitere alternative erfindungsgemäße Ablagevorrichtung mit einem an einem Ablageelement und/oder an einer Befestigungseinheit der erfindungsgemäßen Ablagevorrichtung beweglich gelagertes Ein- und/oder Ausgabeelement einer Elektronikeinheit der erfindungsgemäßen Ablagevorrichtung in einer schematischen Darstellung.

### Beschreibung der Ausführungsbeispiele

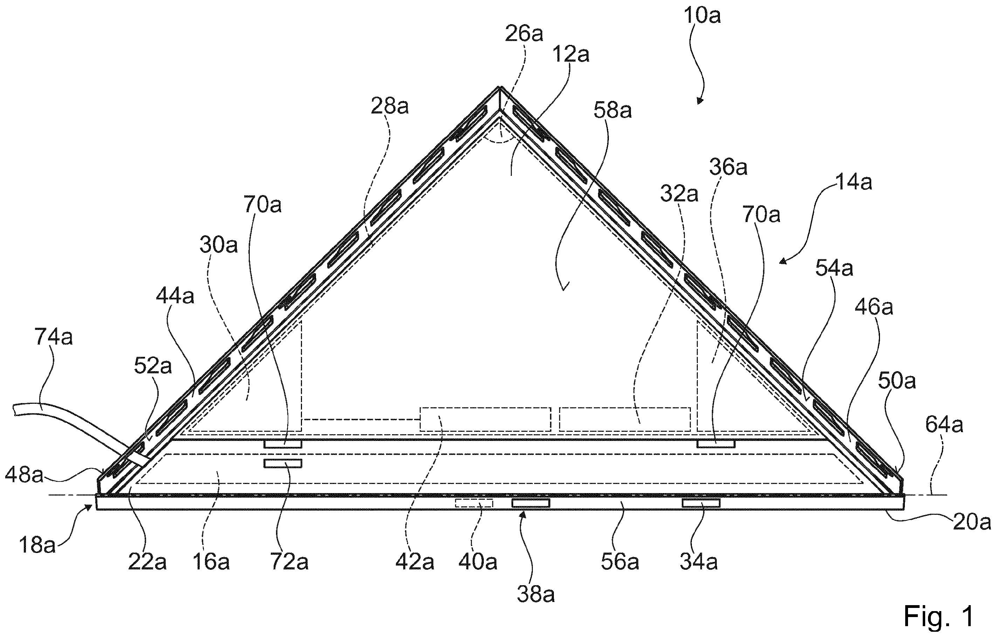

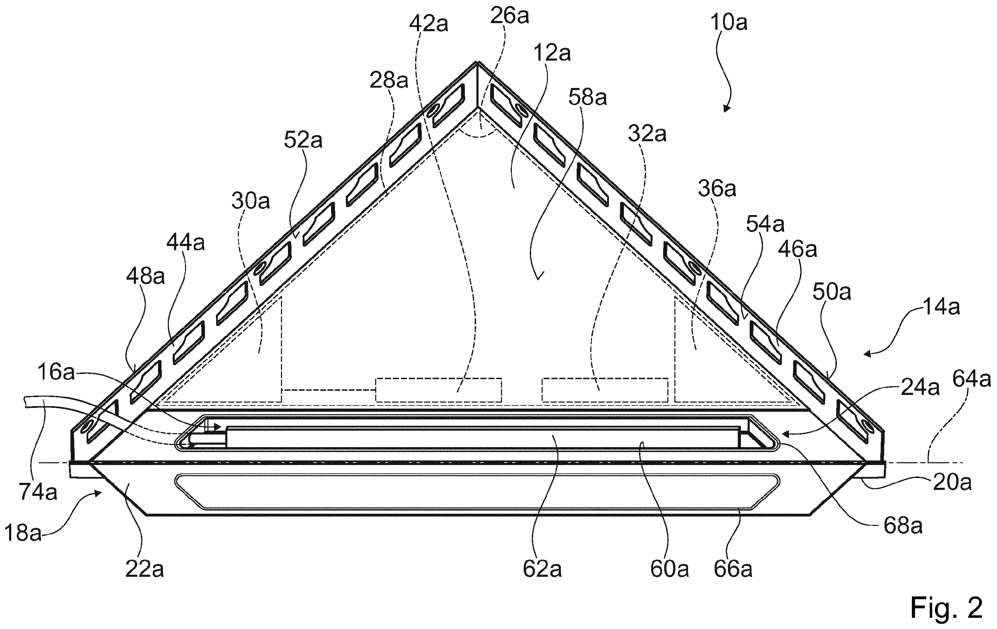

Figur 1 zeigt eine Ablagevorrichtung 10a, insbesondere eine Bad- und/oder Duschablagevorrichtung. Die Ablagevorrichtung 10a ist vorzugsweise dazu vorgesehen, an einer Wand (hier nicht näher dargestellt), insbesondere einer befliesten Raumwand, angeordnet zu werden. Es ist jedoch auch denkbar, dass die Ablagevorrichtung 10a dazu vorgesehen ist, an einer Möbelwand o. dgl. angeordnet zu werden. Bevorzugt ist die Ablagevorrichtung 10a dazu vorgesehen, auf eine, einem Fachmann bereits aus der DE 10 2012 015 574 A1 bekannte Art und Weise an der Wand, insbesondere unter einem Wandbelag, wie beispielsweise Fliesen, angeordnet zu werden. Die Ablagevorrichtung 10a umfasst bevorzugt zumindest eine Befestigungseinheit 14a zu einer Anordnung an der Wand. Die Befestigungseinheit 14a umfasst bevorzugt zumindest ein Wandbefestigungselement 44a, 46a zu einer Befestigung der Befestigungseinheit 14a an der Wand, insbesondere der befliesten Raumwand. Das Wandbefestigungselement 44a, 46a umfasst vorzugsweise zumindest eine Wandanlagefläche 48a, 50a, mittels derer das Wandbefestigungselement 44a, 46a an der Wand anordenbar ist, insbesondere an einer Rohwand, die vorzugsweise unbefliest ist. Die Wandanlagefläche 48a, 50a ist vorzugsweise dazu vorgesehen, mittels eines Fliesenklebers und/oder eines Befestigungselements, wie beispielsweise mittels einer Schraube, mittels eines Nagels o. dgl., an der Wand, insbesondere an der Rohwand, befestigt zu werden. Bevorzugt umfasst das Wandbefestigungselement 44a, 46a zumindest eine Wandbelagsanlagefläche 52a, 54a zu einer Anlage an einem Wandbelag (hier nicht näher dargestellt), insbesondere an einer Fliese. Bevorzugt ist der Wandbelag, insbesondere die Fliese, mittels eines Fliesenklebers an der Wandbelagsanlagefläche 52a, 54a fixierbar. Die Wandbelagsanlagefläche 52a, 54a ist vorzugsweise auf einer der Wandanlagefläche 48a, 50a abgewandten Seite des Wandbefestigungselements 44a, 46a. In einem mittels der Befestigungseinheit 14a an der Wand angeordneten Zustand der Ablagevorrichtung 10a ist das Wandbefestigungselement 44a, 46a vorzugsweise zwischen dem Wandbelag und der Rohwand angeordnet, insbesondere betrachtet entlang einer zumindest im Wesentlichen senkrecht zu einer Haupterstreckungsebene des Wandbefestigungselements 44a, 46a verlaufenden Richtung. In der in den Figuren 1 und 2 dargestellten Ausgestaltung der Ablagevorrichtung 10a weist die Befestigungseinheit 14a zumindest zwei Wandbefestigungselemente 44a, 46a auf. Es ist jedoch auch denkbar, dass die Befestigungseinheit 14a eine von zwei abweichende Anzahl von Wandbefestigungselementen 44a, 46a aufweist. In der in den Figuren 1 und 2 dargestellten Ausgestaltung der Ablagevorrichtung 10a weist die Ablagevorrichtung 10a und/oder die Befestigungseinheit 14a eine polygonale Grundform auf. Vorzugsweise weist die Ablagevorrichtung 10a und/oder die Befestigungseinheit 14a in der in den Figuren 1 und 2 dargestellten Ausgestaltung der Ablagevorrichtung 10a eine dreieckige Grundform auf. Die Wandbefestigungselemente 44a, 46a sind an Schenkeln der dreieckig ausgebildeten Grundform der Ablagevorrichtung 10a und/oder der Befestigungseinheit 14a angeordnet. Die Haupterstreckungsebene der Wandbefestigungselemente 44a, 46a verläuft jeweils zumindest im Wesentlichen senkrecht zu einer Grundfläche der Ablagevorrichtung 10a und/oder der Befestigungseinheit 14a.

Die Ablagevorrichtung 10a umfasst zumindest ein Ablageelement 12a und zumindest die Befestigungseinheit 14a zu einer Befestigung des Ablageelements 12a an der Wand, insbesondere an der befliesten Raumwand. Das Ablageelement 12a ist an einem Grundkörperelement 20a der Befestigungseinheit 14a angeordnet, insbesondere daran fixiert. Die Wandbefestigungselemente 44a, 46a, das Grundkörperelement 20a und zumindest ein Randsteg 56a bilden vorzugsweise zusammen eine Aufnahme für das Ablageelement 12a. Der Randsteg 56a und/oder die Wandbefestigungselemente 44a, 46a erstrecken sich bevorzugt zumindest im Wesentlichen senkrecht zu einer Ablagefläche 58a des Ablageelements 12a. Die Wandbefestigungselemente 44a, 46a, das Grundkörperelement 20a und der Randsteg 56a sind einteilig miteinander ausgebildet.

Die Ablagevorrichtung 10a umfasst zumindest eine zumindest teilweise am Ablageelement 12a angeordnete Elektronikeinheit 16a, insbesondere eine Beleuchtungseinheit und/oder eine Unterhaltungselektronikeinheit. Bevorzugt ist die Elektronikeinheit 16a zumindest teilweise, insbesondere zumindest zu einem Großteil, in die Ablagevorrichtung 10a, insbesondere in das Ablageelement 12a, integriert.

Das Ablageelement 12a und/oder das Grundkörperelement 20a der Befestigungseinheit 14a umfasst zumindest eine Aufnahmeausnehmung 60a zu einer zumindest teilweisen Aufnahme der Elektronikeinheit 16a (vgl. Figur 2). Vorzugsweise ist die Elektronikeinheit 16a zumindest zu einem Großteil in der Aufnahmeausnehmung 60a angeordnet. Vorzugsweise ist die Elektronikeinheit 16a als Beleuchtungseinheit und/oder als Unterhaltungselektronikeinheit ausgebildet. Die Elektronikeinheit 16a kann als LED-Einheit, als Lautsprechereinheit, als Displayeinheit, als Induktionsladeeinheit, als elektronische Bedieneinheit, als Projektionseinheit, als Sensoreinheit, als Energieumwandlungseinheit, als Kameraeinheit, als Mirkofoneinheit und/oder als eine andere, einem Fachmann als sinnvoll erscheinende Elektronikeinheit ausgebildet sein. Bevorzugt umfasst die Elektronikeinheit 16a, insbesondere bei einer Ausgestaltung der Elektronikeinheit 16a als Beleuchtungseinheit, zumindest ein Beleuchtungselement 62a, insbesondere zumindest eine LED, das am Ablageelement 12a und/oder an der Befestigungseinheit 14a angeordnet ist. Vorzugsweise ist das Beleuchtungselement 62a zumindest teilweise, insbesondere vollständig, in der Aufnahmeausnehmung 60a angeordnet. Besonders bevorzugt umfasst die Elektronikeinheit 16a, insbesondere bei einer Ausgestaltung der Elektronikeinheit 16a als Beleuchtungseinheit, eine Vielzahl an Beleuchtungselementen 62a, insbesondere LEDs, die am Ablageelement 12a und/oder an der Befestigungseinheit 14a angeordnet sind, insbesondere in der Aufnahmeausnehmung 60a angeordnet sind.

Die Ablagevorrichtung 10a umfasst zumindest eine Revisionseinheit 18a, die zumindest ein am Grundkörperelement 20a der Befestigungseinheit 14a und/oder an dem Ablageelement 12a angeordnetes Revisionselement 22a aufweist (vgl. Figuren 1 und 2), wobei dieses Revisionselement abnehmbar und/oder beweglich gelagert ist. In der in den Figuren 1 und 2 dargestellten Ausgestaltung der Ablagevorrichtung 10a ist das Revisionselement 22a beweglich, insbesondere schwenkbar, am Ablageelement 12a und/oder an der Befestigungseinheit 14a, insbesondere am Randsteg 56a, gelagert. Das Revisionselement 22a ist vorzugsweise als Revisionsklappe ausgebildet. In Figur 1 ist das Revisionselement 22a in einem geschlossenen Zustand dargestellt. In Figur 2 ist das Revisionselement 22a in einem geöffneten Zustand dargestellt. Eine Bewegungsachse 64a, insbesondere eine Schwenkachse, des Revisionselements 22a verläuft vorzugsweise zumindest im Wesentlichen parallel zur Ablagefläche 58a. Es ist jedoch auch denkbar, dass die Bewegungsachse 64a des Revisionselements 22a entlang einer anderen, einem Fachmann als sinnvoll erscheinenden Richtung verläuft. Bevorzugt ist das Revisionselement 22a an der Ablagefläche 58a angeordnet. Insbesondere bildet das Revisionselement 22a einen Teil der Ablagefläche 58a. Das Revisionselement 22a ist vorzugsweise an einer dem Grundkörperelement 20a abgewandten Seite des Ablageelements 12a am Ablageelement 12a angeordnet, insbesondere in einem geschlossenen Zustand des Revisionselements 22a. Vorzugsweise umfasst die Revisionseinheit 18a zumindest ein, insbesondere beweglich gelagertes, Fixierungselement 70a zu einer Sicherung des Revisionselements 22a gegen eine Bewegung relativ zum Ablageelement 12a und/oder zum Grundkörperelement 20a. Das Fixierungselement 70a ist bevorzugt als Verschluss ausgebildet. Das Fixierungselement 70a kann als beweglich gelagerter Drehhebel, als Kniegelenkverschluss, als Schraube, als Rastverschluss oder als ein anderer, einem Fachmann als sinnvoll erscheinender Verschluss ausgebildet sein.

Die Ablagevorrichtung 10a umfasst zumindest eine Dichtungseinheit 24a, die dazu vorgesehen ist, das Revisionselement 22a dichtend am Grundkörperelement 20a und/oder am Ablageelement 12a anzuordnen, insbesondere gemäß einer Schutzklasse größer als IP51 nach DIN EN 60529 (vgl. Figur 2). Die Dichtungseinheit 24a umfasst zumindest ein am Grundkörperelement 20a und/oder am Ablageelement 12a angeordnetes Dichtungselement 66a, 68a. Das Dichtungselement 66a, 68a ist vorzugsweise zwischen dem Revisionselement 22a sowie dem Grundkörperelement 20a und/oder dem Ablageelement 12a angeordnet. Vorzugsweise umgibt das Dichtungselement 66a, 68a die Aufnahmeausnehmung 60a zumindest teilweise, insbesondere vollständig. Bevorzugt liegt das Dichtungselement 66a, 68a mit zumindest einer Dichtfläche am Grundkörperelement 20a und/oder dem Ablageelement 12a an. Vorzugsweise liegt das Dichtungselement 66a, 68a mit zumindest einer weiteren Dichtungsfläche am Revisionselement 22a an, insbesondere in einem geschlossenen Zustand des Revisionselements 22a. Bevorzugt umfasst die Dichtungseinheit 24a zumindest zwei Dichtungselemente 66a, 68a. Zumindest eines der Dichtungselemente 66a, 68a ist bevorzugt am Grundkörperelement 20a und/oder dem Ablageelement 12a angeordnet. Eines der Dichtungselemente 66a, 68a ist bevorzugt am Revisionselement 22a angeordnet. Es ist jedoch auch denkbar, dass die Dichtungseinheit 24a eine von zwei abweichende Anzahl an Dichtungselementen 66a, 68a aufweist.

Die Ablagevorrichtung 10a umfasst zumindest eine, insbesondere drahtlose, Kommunikationseinheit 26a, die dazu vorgesehen ist, elektronische Daten mit einer externen Einheit (hier nicht näher dargestellt) auszutauschen, die von der Elektronikeinheit 16a verarbeitbar sind und/oder zu einer Steuerung und/oder Regelung der Elektronikeinheit 16a vorgesehen sind. Die Kommunikationseinheit 26a kann als Bluetootheinheit, als NFC-Einheit, als Infraroteinheit, als Funkeinheit, insbesondere als WLAN-Einheit, und/oder als eine andere, einem Fachmann als sinnvoll erscheinende, insbesondere drahtlose, Kommunikationseinheit ausgebildet sein. Die externe Einheit kann als Fernbedienung, insbesondere zu einer Steuerung und/oder Regelung der Elektronikeinheit 16a, wie beispielsweise zu einer Steuerung und/oder Regelung einer Farbe der als Beleuchtungseinheit ausgebildeten Elektronikeinheit 16a, zu einer Steuerung und/oder Regelung einer Helligkeit der als Beleuchtungseinheit ausgebildeten Elektronikeinheit 16a, zu einer Steuerung und/oder Regelung einer Lautstärke der als Unterhaltungselektronikeinheit ausgebildeten Elektronikeinheit 16a, zu einer Intensität eines Displays der als Unterhaltungselektronikeinheit ausgebildeten Elektronikeinheit 16a, zu einer Steuerung und/oder Regelung einer Temperatur der als Thermostateinheit ausgebildeten Elektronikeinheit 16a o. dgl., ausgebildet sein.

Die Elektronikeinheit 16a weist zumindest eine, insbesondere kabelgebundene, Energie- und/oder Kommunikationsschnittstelle 34a zu einer Übertragung von elektrischer Energie und/oder elektronischen Daten auf. Die Energie- und/oder Kommunikationsschnittstelle 34a ist bevorzugt als USB-Schnittstelle ausgebildet. Es ist jedoch auch denkbar, dass die Energie- und/oder Kommunikationsschnittstelle 34a eine andere, einem Fachmann als sinnvoll erscheinende Ausgestaltung aufweist. Die Energie- und/oder Kommunikationsschnittstelle 34a ist vorzugsweise zumindest teilweise an einer, insbesondere in einem an der Wand angeordneten Zustand der Ablagevorrichtung 10a zugänglichen, Außenseite, wie beispielsweise im Bereich des Randstegs 56a, an der Ablagefläche 58a, an einer der Ablagefläche 58a abgewandten Seite des Grundkörperelements 20a angeordnet. Vorzugsweise umfasst die Dichtungseinheit 24a zumindest ein Verschlusselement (hier nicht näher dargestellt), das dazu vorgesehen ist, die Energie- und/oder Kommunikationsschnittstelle 34a dichtend zu verschließen.

Des Weiteren umfasst die Elektronikeinheit 16a bevorzugt zumindest ein, insbesondere akustisches und/oder optisches, Ein- und/oder Ausgabeelement 28a, das am Grundkörperelement 20a und/oder am Ablageelement 12a angeordnet ist, wobei das Ein- und/oder Ausgabeelement 28a in Abhängigkeit von mittels der Kommunikationseinheit 26a übertragenen elektronischen Daten steuerbar und/oder regelbar ist. Das Ein- und/oder Ausgabeelement 28a kann als Display, insbesondere als Touchdisplay, und/oder als Lautsprecher ausgebildet sein. Bei einer Ausgestaltung des Ein- und/oder Ausgabeelements 28a als Display ist das Ein- und/oder Ausgabeelement 28a vorzugsweise zumindest teilweise in das Ablageelement 12a integriert. Insbesondere bildet das Ein- und/oder Ausgabeelement 28a zumindest teilweise die Ablagefläche 58a des Ablageelements 12a. Es ist jedoch auch denkbar, dass das Ein- und/oder Ausgabeelement 28a an einer anderen, einem Fachmann als sinnvoll erscheinenden Position an der Ablagevorrichtung 10a angeordnet ist, wie beispielsweise am Revisionselement 22a. Bei einer Anordnung des Ein- und/oder Ausgabeelement 28a am Revisionselement 22a ist das Ein- und/oder Ausgabeelement 28a vorzugsweise zusammen mit dem Revisionselement 22a relativ zum Ablageelement 12a und/oder zum Grundkörperelement 20a beweglich gelagert.

Die Elektronikeinheit 16a weist zumindest ein am Grundkörperelement 20a und/oder am Ablageelement 12a angeordnetes, insbesondere berührungsempfindliches, Bedienelement 32a zu einer Eingabe von Bedienbefehlen auf. Es ist jedoch auch denkbar, dass alternativ das, insbesondere berührungsempfindliche, Bedienelement 32a am Revisionselement 22a angeordnet ist oder dass zusätzlich ein, insbesondere berührungsempfindliches, weiteres Bedienelement 72a zu einer Eingabe von Bedienbefehlen am Revisionselement 22a angeordnet ist. Vorzugsweise ist das Bedienelement 32a und/oder das weitere Bedienelement 72a als Touchbedienelement ausgebildet. Es ist jedoch auch denkbar, dass das Bedienelement 32a und/oder das weitere Bedienelement 72a eine andere, einem Fachmann als sinnvoll erscheinende Ausgestaltung aufweist. Es ist auch denkbar, dass das Bedienelement 32a und/oder das weitere Bedienelement 72a einteilig mit dem als Touchdisplay ausgebildeten Ein- und/oder Ausgabeelement 28a ausgebildet ist.

Die Ablagevorrichtung 10a umfasst zumindest eine Energieumwandlungseinheit 30a, insbesondere eine Energy-Harvesting-Einheit, die dazu vorgesehen ist, mechanische Energie und/oder thermische Energie in elektrische Energie für einen Betrieb der Elektronikeinheit 16a umzuwandeln. Die Energieumwandlungseinheit 30a ist vorzugsweise am Ablageelement 12a und/oder am Grundkörperelement 20a angeordnet. Bevorzugt ist die Energieumwandlungseinheit 30a an einer dem Grundkörperelement 20a abgewandten Seite des Ablageelements 12a angeordnet, insbesondere an der Ablagefläche 58a. Die Ablagevorrichtung 10a umfasst zumindest eine Energiespeichereinheit 42a, insbesondere Akkumulator, zu einer Speicherung von elektrischer Energie zu einer Versorgung der Elektronikeinheit 16a. Die Energieumwandlungseinheit 30a ist bevorzugt elektrisch mit der Energiespeichereinheit 42a verbunden. Die Energiespeichereinheit 42a kann im Grundkörperelement 20a oder im Ablageelement 12a angeordnet sein, insbesondere in der Aufnahmeausnehmung 60a. Es ist denkbar, dass die Ablagevorrichtung 10a und/oder die Elektronikeinheit 16a alternativ oder zusätzlich zur Energiespeichereinheit 42a eine Energieversorgungsleitung 74a aufweist, die zu einer Verbindung mit einem Stromnetz vorgesehen ist, insbesondere zu einer Versorgung zumindest der Elektronikeinheit 16a mit elektrischer Energie.

Die Elektronikeinheit 16a weist zumindest eine Induktionseinheit 36a auf, die zu einer induktiven Übertragung von elektrischer Energie vorgesehen ist. Die Induktionseinheit 36a ist vorzugsweise am Ablageelement 12a, insbesondere im Nahbereich der Ablagefläche 58a des Ablageelements 12a, und/oder am Grundkörperelement 20a angeordnet. Die Induktionseinheit 36a umfasst vorzugsweise zumindest ein Induktionsspulenelement (hier nicht näher dargestellt), das auf eine, einem Fachmann bereits bekannte Art und Weise zu einer kabellosen Übertragung von elektrischer Energie vorgesehen ist.

Die Elektronikeinheit 16a weist zumindest eine Projektionseinheit 38a auf, die dazu vorgesehen ist, Informationen auf einen von der Projektionseinheit 38a beabstandeten Gegenstand, insbesondere eine Raumwand oder einen Wasserstrahl, zu projizieren. Die Projektionseinheit 38a ist bevorzugt am Ablageelement 12a und/oder am Grundkörperelement 20a angeordnet. Vorzugsweise ist zumindest ein Ausgabelinsenelement (hier nicht näher dargestellt) der Projektionseinheit 38a in einer Außenseite des Ablageelements 12a und/oder des Grundkörperelements 20a angeordnet, insbesondere zu einer Ermöglichung einer Aussendung eines Projektionsstrahls, insbesondere eines Licht- und/oder Laserstrahls.

Die Elektronikeinheit 16a weist zumindest ein Thermostatelement 40a zu einer Regelung einer Temperatur eines Wasserstrahls und/oder einer Raumtemperatur auf, insbesondere infolge einer drahtlosen Übertragung von elektronischen Daten an eine externe Heizungsvorrichtung (hier nicht näher dargestellt). Das Thermostatelement 40a ist vorzugsweise datentechnisch mit der Kommunikationseinheit 26a verbunden, insbesondere zu einer Realisierung einer drahtlosen Übertragung von elektronischen Daten an die externe Heizungsvorrichtung. Vorzugsweise kann ein Bediener beispielsweise über das als Touchdisplay ausgebildete Ein- und/oder Ausgabeelement 28a, über das Bedienelement 32a und/oder über das weitere Bedienelement 72a eine gewünschte Temperatur eingeben, auf die das Thermostatelement 40a eine Temperatur eines Wasserstrahls und/oder eine Raumtemperatur infolge einer drahtlosen Übertragung von elektronischen Daten an die externe Heizungsvorrichtung regelt.

Weitere, einem Fachmann als sinnvoll erscheinende Funktionen der Elektronikeinheit 16a und/oder Anordnungen der Elektronikeinheit 16a an dem Ablageelement 12a und/oder dem Grundkörperelement 20a sind ebenfalls denkbar.

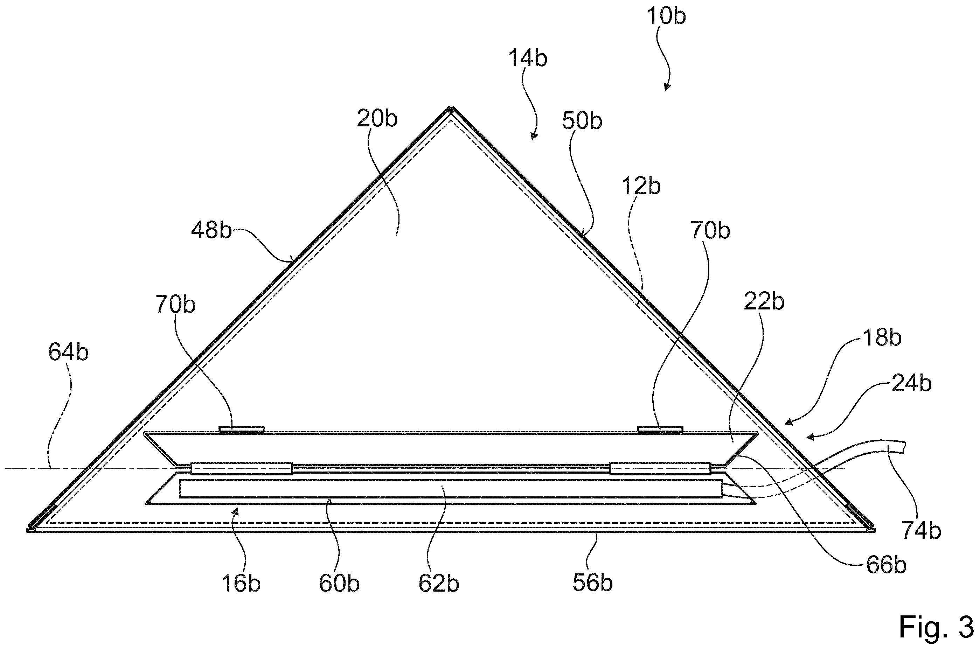

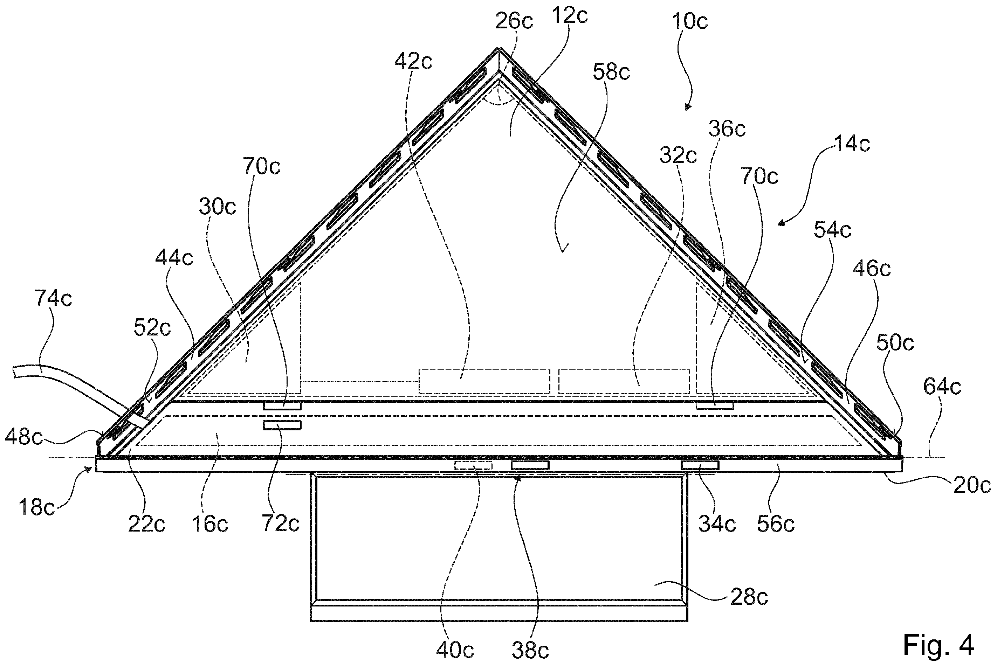

In Figuren 3 und 4 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In dem Ausführungsbeispielen der Figuren 3 und 4 ist der Buchstabe a durch die Buchstaben b und c ersetzt.

Figur 3 zeigt eine alternative Ablagevorrichtung 10b, die insbesondere als Bad- und/oder Duschablagevorrichtung ausgebildet ist Die Ablagevorrichtung 10b umfasst zumindest ein Ablageelement 12b und zumindest eine Befestigungseinheit 14b zu einer Befestigung des Ablageelements 12b an einer Wand, insbesondere einer befliesten Raumwand. Die Ablagevorrichtung 10b umfasst zumindest eine zumindest teilweise am Ablageelement 12b angeordnete Elektronikeinheit 16b, insbesondere eine Beleuchtungseinheit und/oder eine Unterhaltungselektronikeinheit. Im Unterschied zu der in der Beschreibung der Figuren 1 und 2 beschriebenen Ablagevorrichtung 10a umfasst die in der Figur 3 dargestellte Ablagevorrichtung 10b zumindest ein an einem Grundkörperelement 20b der Befestigungseinheit 14b der Ablagevorrichtung 10b angeordnetes Revisionselement 22b einer Revisionseinheit 18b der Ablagevorrichtung 10b. Das Revisionselement 22b ist beweglich, insbesondere schwenkbar, am Grundkörperelement 20b und/oder an einem Randsteg 56b der Befestigungseinheit 14b, gelagert. Das Revisionselement 22b ist vorzugsweise als Revisionsklappe ausgebildet. Eine Bewegungsachse 64b, insbesondere eine Schwenkachse, des Revisionselements 22b verläuft vorzugsweise zumindest im Wesentlichen parallel zu einer Ablagefläche 58b des Ablageelements 12b. Es ist jedoch auch denkbar, dass die Bewegungsachse 64b des Revisionselements 22b entlang einer anderen, einem Fachmann als sinnvoll erscheinenden Richtung verläuft. Bevorzugt ist das Revisionselement 22b an einer der Ablagefläche 58b abgewandten Seite des Grundkörperelements 20b am Grundkörperelement 20b und/oder am Randsteg 56b angeordnet. Zusätzlich ist es denkbar, dass die Revisionseinheit 18b ein weiteres Revisionselement (hier nicht näher dargestellt) aufweist, das, insbesondere analog zu dem in der Beschreibung der Figuren 1 und 2 beschriebenen Revisionselement 22a beweglich, insbesondere schwenkbar, am Ablageelement 12b und/oder an der Befestigungseinheit 14b, insbesondere am Randsteg 56b, gelagert ist. Hinsichtlich weiterer Merkmale der in Figur 3 dargestellten Ablagevorrichtung 10b darf auf die Beschreibung der Figuren 1 und 2 verwiesen werden, die analog auf die Figur 3 zu lesen ist.

Figur 4 zeigt eine weitere alternative Ablagevorrichtung 10c, die insbesondere als Bad- und/oder Duschablagevorrichtung ausgebildet ist Die Ablagevorrichtung 10c umfasst zumindest ein Ablageelement 12c und zumindest eine Befestigungseinheit 14c zu einer Befestigung des Ablageelements 12c an einer Wand, insbesondere einer befliesten Raumwand. Die Ablagevorrichtung 10c umfasst zumindest eine zumindest teilweise am Ablageelement 12c angeordnete Elektronikeinheit 16c, insbesondere eine Beleuchtungseinheit und/oder eine Unterhaltungselektronikeinheit. Im Unterschied zu der in der Beschreibung der Figuren 1 und 2 beschriebenen Ablagevorrichtung 10a umfasst die in der Figur 4 dargestellte Ablagevorrichtung 10c ein an einem Grundkörperelement 20c der Befestigungseinheit 14c und/oder an einem Randsteg 56c der Befestigungseinheit 14c beweglich, insbesondere schwenkbar, gelagertes Ein- und/oder Ausgabeelement 28c der Elektronikeinheit 16c. Das beweglich gelagerte Ein- und/oder Ausgabeelement 28c ist vorzugsweise als Touchdisplay ausgebildet. Eine Bewegungsachse des Ein- und/oder Ausgabeelements 28c verläuft vorzugsweise zumindest im Wesentlichen parallel zu einer Ablagefläche 58c des Ablageelements 12c. Bevorzugt ist das Ein- und/oder Ausgabeelement 28c an einer der Ablagefläche 58c des Ablageelements 12c abgewandten Seite des Grundkörperelements 20c und/oder des Randstegs 56c beweglich an der Befestigungseinheit 14c gelagert. Vorzugsweise ist das Ein- und/oder Ausgabeelement 28c in einem eingeschwenkten Zustand an das Grundkörperelement 20c, insbesondere an die der Ablagefläche 58c des Ablageelements 12c abgewandten Seite des Grundkörperelements 20c, anlegbar. Hinsichtlich weiterer Merkmale der in Figur 4 dargestellten Ablagevorrichtung 10c darf auf die Beschreibung der Figuren 1 und 2 verwiesen werden, die analog auf die Figur 4 zu lesen ist.

### Bezugszeichen

- 10: Ablagevorrichtung
- 12: Ablageelement
- 14: Befestigungseinheit
- 16: Elektronikeinheit
- 18: Revisionseinheit
- 20: Grundkörperelement
- 22: Revisionselement
- 24: Dichtungseinheit
- 26: Kommunikationseinheit
- 28: Ein- und/oder Ausgabeelement
- 30: Energieumwandlungseinheit
- 32: Bedienelement
- 34: Energie- und/oder Kommunikationsschnittstelle
- 36: Induktionseinheit
- 38: Projektionseinheit
- 40: Thermostatelement
- 42: Energiespeichereinheit
- 44: Wandbefestigungselement
- 46: Wandbefestigungselement
- 48: Wandanlagefläche
- 50: Wandanlagefläche
- 52: Wandbelagsanlagefläche
- 54: Wandbelagsanlagefläche
- 56: Randsteg
- 58: Ablagefläche
- 60: Aufnahmeausnehmung
- 62: Beleuchtungselement
- 64: Bewegungsachse
- 66: Dichtungselement
- 68: Dichtungselement
- 70: Fixierungselement
- 72: Bedienelement
- 74: Energieversorgungsleitung

## Patentansprüche

1. Ablagevorrichtung, insbesondere Bad- und/oder Duschablagevorrichtung, mit zumindest einem Ablageelement (12a; 12b; 12c), mit zumindest einer Befestigungseinheit (14a; 14b; 14c) zu einer Befestigung des Ablageelements (12a; 12b; 12c) an einer Wand, insbesondere einer befliesten Raumwand, wobei die Befestigungseinheit (14a; 14b; 14c) zumindest ein Grundkörperelement (20a; 20b; 20c) umfasst, an dem das Ablageelement (12a; 12b; 12c) zumindest teilweise anliegt, mit zumindest einer zumindest teilweise am Ablageelement (12a; 12b; 12c) angeordneten Elektronikeinheit (16a; 16b; 16c), insbesondere einer Beleuchtungseinheit und/oder einer Unterhaltungselektronikeinheit, wobei die Elektronikeinheit (16a; 16b; 16c) zumindest teilweise in die Ablagevorrichtung integriert ist, wobei das Ablageelement (12a; 12b; 12c) und/oder das Grundkörperelement (20a; 20b; 20c) der Befestigungseinheit (14a; 14b; 14c) zumindest eine Aufnahmeausnehmung (60a; 60b) zu einer zumindest teilweisen Aufnahme der Elektronikeinheit (16a; 16b; 16c) umfassen/umfasst, und mit zumindest einer Revisionseinheit (18a; 18b; 18c), die zumindest ein an dem Grundkörperelement (20a; 20b; 20c) der Befestigungseinheit (14a; 14b; 14c) und/oder an dem Ablageelement (12a; 12b; 12c) abnehmbar und/oder beweglich gelagertes Revisionselement (22a; 22b; 22c) aufweist, das dazu vorgesehen ist, die Aufnahmeausnehmung (60a; 60b) zu verschließen und als Revisionsklappe, als Revisionsdeckel oder als Revisionsabdeckung ausgebildet ist, wobei die Befestigungseinheit (14a; 14b; 14c) einen Randsteg (56a; 56b; 56c) umfasst, der dazu vorgesehen ist, zumindest eine Seite des Ablageelements (12a; 12b; 12c) zumindest zu mehr als 30 % zu bedecken, insbesondere in einem an der Befestigungseinheit (14a; 14b; 14c) angeordneten Zustand des Ablageelements (12a; 12b; 12c), **dadurch gekennzeichnet, dass** das Grundkörperelement (20a; 20b; 20c) zumindest eine Anlagefläche umfasst, an dem das Ablageelement (12a; 12b; 12c) in einem an dem Grundkörperelement (20a; 20b; 20c) angeordneten Zustand des Ablageelements (12a; 12b; 12c) mit einer einer Ablagefläche (58a; 58b; 58c) des Ablageelements (12a; 12b; 12c) abgewandten Fläche des Ablageelements (12a; 12b; 12c) anliegt, wobei die Elektronikeinheit (16a; 16b; 16c) zumindest teilweise in das Ablageelement (12a; 12b; 12c) integriert ist.

2. Ablagevorrichtung nach Anspruch 1, **gekennzeichnet durch** zumindest eine Dichtungseinheit (24a; 24b; 24c), die dazu vorgesehen ist, das Revisionselement (22a; 22b; 22c) dichtend am Grundkörperelement (20a; 20b; 20c) und/oder am Ablageelement (12a; 12b; 12c) anzuordnen, insbesondere gemäß einer Schutzklasse größer als IP51 nach DIN EN 60529.

3. Ablagevorrichtung nach Anspruch 1 oder 2, **gekennzeichnet durch** zumindest eine, insbesondere drahtlose, Kommunikationseinheit (26a; 26b; 26c), die dazu vorgesehen ist, elektronische Daten mit einer externen Einheit auszutauschen, die von der Elektronikeinheit (16a; 16b; 16c) verarbeitbar sind und/oder zu einer Steuerung und/oder Regelung der Elektronikeinheit (16a; 16b; 16c) vorgesehen sind.

4. Ablagevorrichtung nach Anspruch 3, **dadurch gekennzeichnet, dass** die Elektronikeinheit (16a; 16b; 16c) zumindest ein, insbesondere akustisches und/oder optisches, Ein- und/oder Ausgabeelement (28a; 28b; 28c) aufweist, das am Grundkörperelement (20a; 20b; 20c) und/oder am Ablageelement (12a; 12b; 12c) angeordnet ist, wobei das Ein- und/oder Ausgabeelement (28a; 28b; 28c) in Abhängigkeit von mittels der Kommunikationseinheit (26a; 26b; 26c) übertragenen elektronischen Daten steuerbar und/oder regelbar ist.

5. Ablagevorrichtung nach einem der vorhergehenden Ansprüche, **dadurch gekennzeichnet, dass** die Elektronikeinheit (16a; 16b; 16c) zumindest ein, insbesondere akustisches und/oder optisches, Ein- und/oder Ausgabeelement (28a; 28b; 28c) aufweist, das beweglich am Grundkörperelement (20a; 20b; 20c) und/oder am Ablageelement (12a; 12b; 12c) gelagert ist.

6. Ablagevorrichtung nach einem der vorhergehenden Ansprüche, **gekennzeichnet durch** zumindest eine Energieumwandlungseinheit (30a; 30b; 30c), insbesondere eine Energy-Harvesting-Einheit, die dazu vorgesehen ist, mechanische Energie und/oder thermische Energie in elektrische Energie für einen Betrieb der Elektronikeinheit (16a; 16b; 16c) umzuwandeln.

7. Ablagevorrichtung nach einem der vorhergehenden Ansprüche, **dadurch gekennzeichnet, dass** die Elektronikeinheit (16a; 16b; 16c) zumindest ein am Grundkörperelement (20a; 20b; 20c) und/oder am Ablageelement (12a; 12b; 12c) angeordnetes, insbesondere berührungsempfindliches, Bedienelement (32a; 32b; 32c) zu einer Eingabe von Bedienbefehlen aufweist.

8. Ablagevorrichtung nach einem der vorhergehenden Ansprüche, **dadurch gekennzeichnet, dass** die Elektronikeinheit (16a; 16b; 16c) zumindest eine, insbesondere kabelgebundene, Energie- und/oder Kommunikationsschnittstelle (34a; 34b; 34c) zu einer Übertragung von elektrischer Energie und/oder elektronischen Daten aufweist.

9. Ablagevorrichtung nach einem der vorhergehenden Ansprüche, **dadurch gekennzeichnet, dass** die Elektronikeinheit (16a; 16b; 16c) zumindest eine Induktionseinheit (36a; 36b; 36c) aufweist, die zu einer induktiven Übertragung von elektrischer Energie vorgesehen ist.

10. Ablagevorrichtung nach einem der vorhergehenden Ansprüche, **dadurch gekennzeichnet, dass** die Elektronikeinheit (16a; 16b; 16c) zumindest eine Projektionseinheit (38a; 38b; 38c) aufweist, die dazu vorgesehen ist, Informationen auf einen von der Projektionseinheit (38a; 38b; 38c) beabstandeten Gegenstand, insbesondere eine Raumwand oder einen Wasserstrahl, zu projizieren.

11. Ablagevorrichtung nach einem der vorhergehenden Ansprüche, **dadurch gekennzeichnet, dass** die Elektronikeinheit (16a; 16b; 16c) zumindest ein Thermostatelement (40a; 40b; 40c) zu einer Regelung einer Temperatur eines Wasserstrahls und/oder einer Raumtemperatur aufweist, insbesondere infolge einer drahtlosen Übertragung von elektronischen Daten an eine externe Heizungsvorrichtung.

12. Ablagevorrichtung nach einem der vorhergehenden Ansprüche, **gekennzeichnet durch** zumindest eine Energiespeichereinheit (42a; 42b; 42c), insbesondere Akkumulator, zu einer Speicherung von elektrischer Energie zu einer Versorgung der Elektronikeinheit (16a; 16b; 16c).

## Claims

1. A storage device, in particular a bath- and/or shower storage device, comprising: at least one storage element (12a; 12b; 12c), at least one fastening unit (14a; 14b; 14c) for fastening the storage element (12a; 12b; 12c) on a wall, in particular on a tiled wall of a room, wherein the fastening unit (14a; 14b; 14c) comprises at least one main body element (20a; 20b; 20c), on which the storage element (12a; 12b; 12c) at least partially abuts, at least one electronics unit (16a; 16b; 16c), which is at least partially arranged on the storage element (12a; 12b; 12c) and is in particular embodied as an illumination unit and/or an entertainment electronics unit, wherein the electronics unit (16a; 16b; 16c) is at least partially integrated into the storage device, wherein the storage element (12a; 12b; 12c) and/or the main body element (20a; 20b; 20c) of the fastening unit (14a; 14b; 14c) comprise(s) at least one receptacle recess (60a; 60b) for at least partially accomodating the electronics unit (16a; 16b; 16c), and comprising at least one inspection unit (18a; 18b; 18c), which comprises at least one inspection element (22a; 22b; 22c) removably or movably supported on the main body element (20a; 20b; 20c) of the fastening unit (14a; 14b; 14c) and/or on the storage element (12a; 12b; 12c), the inspection element (22a; 22b; 22c) being configured to close the receptacle recess (60a; 60b) and being formed as an inspection flap, an inspection lid or an inspection cover, wherein the fastening unit (14a; 14b; 14c) comprises a peripheral web (56a; 56b; 56c), which is configured to cover at least one side of the storage element (12a; 12b; 12c) at least to an extent of more than 30 %, in particular in a state of the storage element (12a; 12b; 12c) arranged on the fastening unit (14a; 14b; 14c), **characterized in that** the main body element (20a; 20b; 20c) comprises at least one contact surface on which the storage element (12a; 12b; 12c) abuts in a state of the storage element (12a; 12b; 12c) arranged on the main body element (20a; 20b; 20c) with a surface of the storage element (12a; 12b; 12c) facing away from the storage surface (58a; 58b; 56c) of the storage element (12a; 12b; 12c), wherein the electronics unit (16a; 16b; 16c) is at least partially integrated in the storage element (12a; 12b; 12c).

2. The storage device according to claim 1, **characterized by** at least one seal unit (24a; 24b; 24c), which is configured to arrange the inspection element (22a; 22b; 22c) in a sealed manner on the main body element (20a; 20b; 20c) and/or on the storage element (12a; 12b; 12c), in particular according to a protection class greater than IP51 according to DIN EN 60529.

3. The storage device according to claim 1 or 2, **characterized by** at least one, in particular wireless, communication unit (26a; 26b; 26c), which is configured to exchange electronic data with an external unit, which are processable by the electronics unit (16a; 16b; 16c) and/or are configured for control and/or regulation of the electronics unit (16a; 16b; 16c).

4. The storage device according to claim 3, **characterized in that** the electronics unit (16a; 16b; 16c) comprises at least one, in particular acoustic or optical, input and/or output element (28a; 28b; 28c), which is arranged on the main body element (20a; 20b; 20c) and/or on the storage element (12a; 12b; 12c), wherein the input and/or output element (28a; 28b; 28c) is controllable and/or regulatable in dependence on electronic data transferred by means of the communication unit (26a; 26b; 26c).

5. The storage device according to any one of the preceding claims, **characterized in that** the electronics unit (16a; 16b; 16c) comprises at least one, in particular acoustic and/or optical, input and/or output element (28a; 28b; 28c), which is movably supported on the main body element (20a; 20b; 20c) and/or on the storage element (12a; 12b; 12c).

6. The storage device according to any one of the preceding claims, **characterized by** at least one energy conversion unit (30a; 30b; 30c), in particular an energy harvesting unit, which is configured to convert mechanical energy and/or thermal energy into electrical energy for operation of the electronics unit (16a; 16b; 16c).

7. The storage device according to any one of the preceding claims, **characterized in that** the electronics unit (16a; 16b; 16c) comprises at least one, in particular touch-sensitive, operating element (32a; 32b; 32c), which is arranged on the main body element (20a; 20b; 20c) and/or on the storage element (12a; 12b; 12c), for inputting operating commands.

8. The storage device according to any one of the preceding claims, **characterized in that** the electronics unit (16a; 16b; 16c) comprises at least one, in particular wired, energy and/or communication interface (34a; 34b; 34c) for transfer of electrical energy and/or electronic data.

9. The storage device according to any one of the preceding claims, **characterized in that** the electronics unit (16a; 16b; 16c) comprises at least one induction unit (36a; 36b; 36c), which is configured to inductively transfer electrical energy.

10. The storage device according to any one of the preceding claims, **characterized in that** the electronics unit (16a; 16b; 16c) comprises at least one projection unit (38a; 38b; 38c), which is configured to project items of information on an object spaced apart from the projection unit (38a; 38b; 38c), in particular a room wall or a water jet.

11. The storage device according to any one of the preceding claims, **characterized in that** the electronics unit (16a; 16b; 16c) comprises at least one thermostat element (40a; 40b; 40c) for regulating a temperature of a water jet and/or a room temperature, in particular as a result of a wireless transfer of electronic data to an external heating device.

12. The storage device according to any one of the preceding claims, **characterized by** at least one energy storage unit (42a; 42b; 42c), in particular an accumulator, for storing electrical energy for supply of the electronics unit (16a; 16b; 16c).

## Revendications

1. Dispositif de rangement, en particulier dispositif de rangement pour salle de bains et/ou douche, comprenant au moins un élément de rangement (12a; 12b; 12c), comprenant au moins une unité de fixation (14a; 14b; 14c) pour une fixation de l'élément de rangement (12a; 12b; 12c) à une paroi, en particulier une paroi de pièce en tuiles, l'unité de fixation (14a; 14b; 14c) comprenant au moins un élément de corps de base (20a; 20b; 20c) contre lequel l'élément de rangement (12a; 12b; 12c) s'applique au moins en partie, comprenant au moins une unité électronique (16a; 16b; 16c), en particulier une unité d'éclairage et/ou une unité électronique grand public, disposée au moins en partie sur l'élément de rangement (12a; 12b; 12c), l'unité électronique (16a; 16b; 16c) étant intégrée au moins en partie dans le dispositif de rangement, où l'élément de rangement (12a; 12b; 12c) et/ou l'élément de corps de base (20a; 20b; 20c) de l'unité de fixation (14a; 14b; 14c) comprend/comprennent au moins un évidement de réception (60a; 60b) pour une réception au moins en partie de l'unité électronique (16a; 16b; 16c), et comprenant au moins une unité de révision (18a; 18b; 18c) qui présente au moins un élément de révision (22a; 22b; 22c) monté de manière amovible et/ou mobile sur l'élément de corps de base (20a; 20b; 20c) de l'unité de fixation (14a; 14b; 14c) et/ou sur l'élément de rangement (12a; 12b; 12c), qui est prévu pour fermer l'évidement de réception (60a; 60b) et est réalisé sous forme de volet de révision, de couvercle de révision ou de recouvrement de révision, l'unité de fixation (14a; 14b; 14c) comprenant une nervure de bord (56a; 56b; 56c) qui est prévue pour recouvrir au moins un côté de l'élément de rangement (12a; 12b; 12c) au moins à plus de 30 %, en particulier dans un état de l'élément de rangement (12a; 12b; 12c) disposé sur l'unité de fixation (14a; 14b; 14c), **caractérisé en ce que** l'élément de corps de base (20a; 20b; 20c) comprend au moins une surface d'appui contre laquelle l'élément de rangement (12a; 12b; 12c) s'applique dans un état de l'élément de rangement (12a; 12b; 12c) disposé sur l'élément de corps de base (20a; 20b; 20c) avec une surface de l'élément de rangement (12a; 12b; 12c) opposée à une surface de rangement (58a; 58b; 58c) de l'élément de rangement (12a; 12b; 12c), l'unité électronique (16a; 16b; 16c) étant intégrée au moins en partie dans l'élément de rangement (12a; 12b; 12c).

2. Dispositif de rangement selon la revendication 1, **caractérisé par** au moins une unité d'étanchéité (24a; 24b; 24c) qui est prévue pour disposer l'élément de révision (22a; 22b; 22c) de manière étanche sur l'élément de corps de base (20a; 20b; 20c) et/ou sur l'élément de rangement (12a; 12b; 12c), en particulier selon une classe de protection supérieure à IP51 selon DIN EN 60529.

3. Dispositif de rangement selon la revendication 1 ou 2, **caractérisé par** au moins une unité de communication (26a; 26b; 26c), en particulier sans fil, qui est prévue pour échanger des données électroniques avec une unité externe, qui peuvent être traitées par l'unité électronique (16a; 16b; 16c) et/ou sont prévues pour une commande et/ou une régulation de l'unité électronique (16a; 16b; 16c).

4. Dispositif de rangement selon la revendication 3, **caractérisé en ce que** l'unité électronique (16a; 16b; 16c) présente au moins un élément d'entrée et/ou de sortie (28a; 28b; 28c), en particulier acoustique et/ou optique, qui est disposé sur l'élément de corps de base (20a; 20b; 20c) et/ou sur l'élément de rangement (12a; 12b; 12c), l'élément d'entrée et/ou de sortie (28a; 28b; 28c) pouvant être commandé et/ou régulé en fonction de données électroniques transmises au moyen de l'unité de communication (26a; 26b; 26c).

5. Dispositif de rangement selon l'une quelconque des revendications précédentes, **caractérisé en ce que** l'unité électronique (16a; 16b; 16c) présente au moins un élément d'entrée et/ou de sortie (28a; 28b; 28c), en particulier acoustique et/ou optique, qui est supporté de manière mobile sur l'élément de corps de base (20a; 20b; 20c) et/ou sur l'élément de rangement (12a; 12b; 12c).

6. Dispositif de rangement selon l'une quelconque des revendications précédentes, **caractérisé par** au moins une unité de conversion d'énergie (30a; 30b; 30c), en particulier une unité de récupération d'énergie, qui est prévue pour convertir de l'énergie mécanique et/ou de l'énergie thermique en énergie électrique pour un fonctionnement de l'unité électronique (16a; 16b; 16c).

7. Dispositif de rangement selon l'une quelconque des revendications précédentes, **caractérisé en ce que** l'unité électronique (16a; 16b; 16c) présente au moins un élément de commande (32a; 32b; 32c), en particulier tactile, disposé sur l'élément de corps de base (20a; 20b; 20c) et/ou sur l'élément de rangement (12a; 12b; 12c) pour une entrée d'instructions de commande.

8. Dispositif de rangement selon l'une quelconque des revendications précédentes, **caractérisé en ce que** l'unité électronique (16a; 16b; 16c) présente au moins une interface d'énergie et/ou de communication (34a; 34b; 34c), en particulier filaire, pour une transmission d'énergie électrique et/ou de données électroniques.

9. Dispositif de rangement selon l'une quelconque des revendications précédentes, **caractérisé en ce que** l'unité électronique (16a; 16b; 16c) présente au moins une unité d'induction (36a; 36b; 36c) qui est prévue pour une transmission inductive d'énergie électrique.

10. Dispositif de rangement selon l'une quelconque des revendications précédentes, **caractérisé en ce que** l'unité électronique (16a; 16b; 16c) présente au moins une unité de projection (38a; 38b; 38c) qui est prévue pour projeter des informations sur un objet espacé de l'unité de projection (38a; 38b; 38c), en particulier une paroi de pièce ou un jet d'eau.

11. Dispositif de rangement selon l'une quelconque des revendications précédentes, **caractérisé en ce que** l'unité électronique (16a; 16b; 16c) présente au moins un élément thermostatique (40a; 40b; 40c) pour une régulation d'une température d'un jet d'eau et/ou d'une température ambiante, en particulier suite à une transmission sans fil de données électroniques à un dispositif de chauffage externe.

12. Dispositif de rangement selon l'une quelconque des revendications précédentes, **caractérisé par** au moins une unité de stockage d'énergie (42a; 42b; 42c), en particulier un accumulateur, pour un stockage d'énergie électrique pour une alimentation de l'unité électronique (16a; 16b; 16c).
